# EUROPEAN PATENT SPECIFICATION

(11) **EP 1 707 491 B1**
(45) Date of publication and mention of the grant of the patent: **19.05.2010**
(21) Application number: 06111076.3
(22) Date of filing: 14.03.2006
(51) Int. Cl.: B65B 43/18, B65B 43/26, B65B 43/28, B31B 5/80, B65B 43/50

(54) **Device for picking and opening boxes suitable for packaging products**
Vorrichtung zum Greifen und Aufmachen von Schachteln für die Verpackung von Produkten
Dispositif pour saisir et ouvrir des boîtes pour l'emballage des produits

(30) Priority: 01.04.2005 IT BO20050212
(43) Date of publication of application: 04.10.2006
(73) Proprietor: O.A.M.- Società per Azioni, 40065 Pianoro (Bologna) (IT)
(72) Inventor: Martelli, Antonio, 40136 Bologna (IT)
(74) Representative: Modiano, Micaela Nadia

(56) References cited:
- EP-A1- 0 569 340
- GB-A- 1 269 377
- GB-A- 2 053 133
- JP-A- 7 223 614
- US-A- 2 671 385

## Description

The present invention relates to a device for picking and opening boxes suitable for packaging products.

Apparatuses are known which are suitable to package products of various types and sizes by automated insertion of such products in boxes which are shaped substantially like a parallelepiped and are made for example of cardboard or other similar materials. The boxes are usually of the type which is fed in a substantially flattened configuration providing minimum space occupation, i.e., folded along the longitudinal edges.

Some of the known types of apparatus provide sequentially certain fundamental production steps; in particular, they first pick each box from an appropriately provided magazine, then open the boxes to make them assume a parallelepipedal configuration, and finally deposit them, substantially by gravity, on a sort of horizontal conveyor of the belt or chain type or the like, which then transfers them in an orderly fashion toward successive production stations, including mainly the station for filling with the products to be packaged (for example large and small bottles, tubes, blister packages and others). An apparatus of this kind is described in Invention Patent No. 1,298,367 in the name of this same Applicant.

These apparatuses are provided usually with a horizontal conveyor, which moves in a closed circuit along a substantially annular path, for example with at least two straight portions connected by curved portions. The continuous motion of the conveyor, provided with the boxes to be filled, along the path described above therefore entails the onset of accelerations and dynamic actions which limit excessively the production rate of the apparatus in relation to the actual requirements of the market.

A horizontal conveyor apparatus is disclosed, for example, by GB 2053133. Document EP 0 569 340 teaches about the use of carousel conveyors.

The aim of the present invention is to obviate the above-mentioned drawback, by providing a device for picking and opening boxes suitable for packaging products, which can operate at a significantly faster production rate than known and traditional types of apparatus.

Within this aim, an object of the present invention is to provide a device for picking and opening boxes suitable for packaging products which is precise and reliable in operation.

Another object of the present invention is to provide a device for picking and opening boxes suitable for packaging products which is adapted to process boxes of different formats in an extremely flexible and versatile manner.

A further object of the present invention is to achieve such aim with a structure which is simple, relatively easy to provide in practice, safe in use, effective in operation, and has a relatively low cost.

This aim and these and other objects that will become better apparent hereinafter are achieved by a device for picking and opening boxes suitable for packaging products, according to the invention, that has the features set forth in claim 1.

Further characteristics and advantages of the invention will become better apparent from the following detailed description of a preferred but not exclusive embodiment of a device for picking and opening boxes suitable for packaging products according to the invention, illustrated by way of non-limiting example in the accompanying drawings, wherein:
Figure 1 is a detail front view of the device according to the invention, in a step of the picking of a box from the magazine;
Figure 2 is a detail front view of the device according to the invention during the opening of said box;
Figure 2a is a view of another detail of Figure 2;
Figure 3 is a detail front view of the device after the box has been opened completely;
Figure 4 is a detail front view of the device according to the invention during the insertion of the box in the open configuration within a respective peripheral seat of the rotating carousel;
Figure 5 is a detail front view of said device with said box completely accommodated in the respective seat of the rotating carousel.

In the exemplary embodiments that follow, individual characteristics, given in relation to specific examples, may actually be interchanged with other different characteristics that exist in other exemplary embodiments.

With reference to the figures, the reference numeral 1 generally designates a device for picking and opening boxes suitable for packaging products according to the invention.

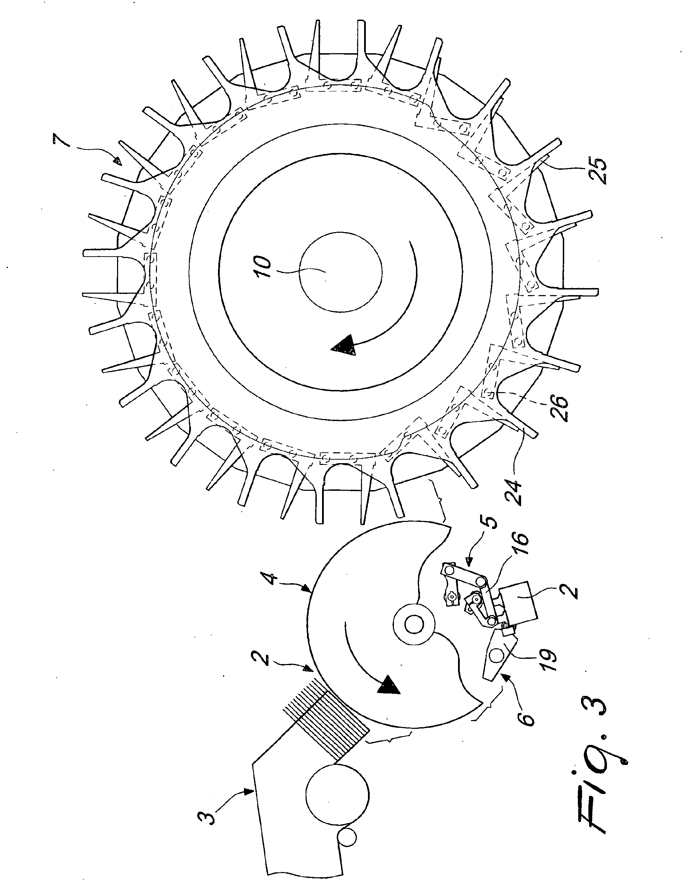

The described device is of the type particularly suitable to package products of any kind in boxes, for example made of cardboard or other lightweight material, which are substantially shaped like parallelepipeds of various dimensions. Each one of the boxes, generally designated by the reference numeral 2, comprises at least one upper wall, a lower wall and four side walls 2a, 2b, 2c, 2d, which, when the box 2 is in the open configuration, are mutually substantially perpendicular (reference should be made, for example, to Figure 3 and to the subsequent figures).

The device 1, supported on a footing which is not shown in the figures for the sake of simplicity, is of the type which comprises at least one magazine, generally designated by the reference numeral 3, for boxes 2 which are packed in a flattened configuration, and at least one rotating drum, generally designated by the reference numeral 4, which has a horizontal rotation axis and is provided peripherally with elements 5 for picking the boxes 2 one by one from the magazine and with means 6 for opening the boxes 2 from the flattened configuration to the configuration for inserting the products therein; the device 1 further comprises at least one conveyor, generally designated by the reference numeral 7, for conveying the boxes 2 in the open configuration from the rotating drum 4 toward subsequent production stations of the product packaging process. These subsequent production stations can be constituted, merely by way of non-limiting example, by a station for filling the boxes 2 with the products to be packaged and/or by other required stations (for example, labeling or others).

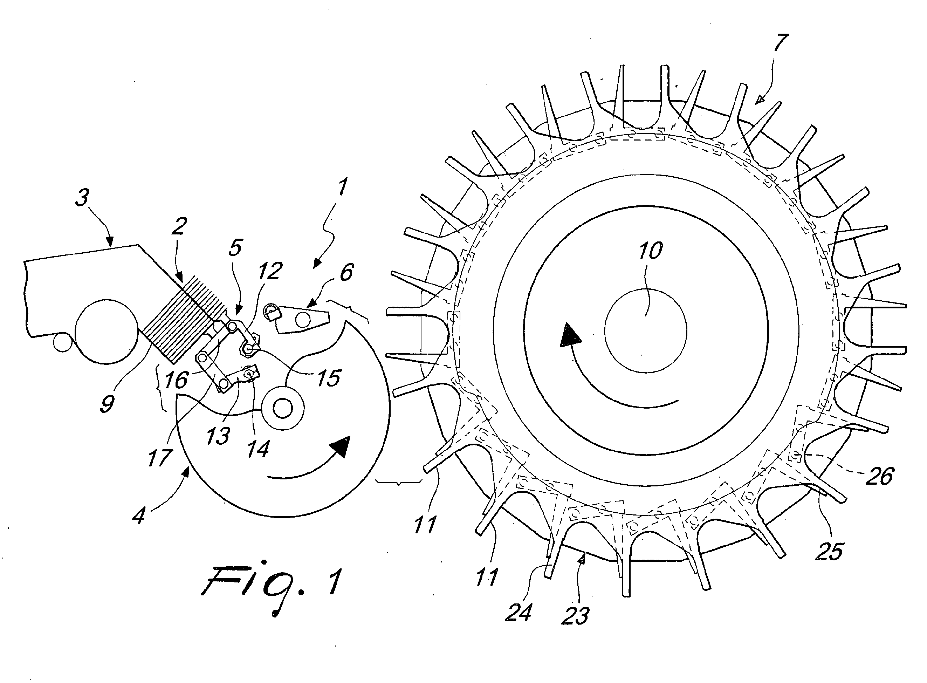

In particular, the picking elements 5 and the opening means 6 for the boxes are conveniently actuated by cam means, which are not shown for the sake of simplicity and clarity in the figures and are of a substantially known type, said means being described extensively in the already-cited Invention Patent No. 1,298,367 in the name of this same Applicant. The picking elements 5 are conveniently of the articulated type and are provided with means 8 for gripping the boxes 2 from the magazine 3 and for releasing said boxes into the conveyor. The magazine 3 (Figure 1) is of the type which comprises an inclined guide 9, along which the boxes 2 advance one next to the other toward the rotating drum 4, entrained by means which are not shown in the figures and are of a traditional type.

According to the invention, the conveyor 7 comprises advantageously at least one rotating carousel 10, which has a horizontal rotation axis which is parallel to the axis of the rotating drum 4 and forms a plurality of peripheral seats 11, which are adapted to accommodate the boxes 2 in the open configuration which are deposited by the grip and release means 8, so as to convey them in an orderly fashion toward the subsequent production stations.

Actuation means are provided which are supported in the footing of the machine and are not shown in the figures because they are of a known and substantially traditional type; such means are adapted to turn, with appropriate and preset peripheral speeds, the rotating drum 4 in the opposite direction with respect to the rotating carousel 10, so as to allow the continuous deposition of the open boxes 2 respectively from the grip and release means 8 to the peripheral seats 11 of the rotating carousel 10.

Each one of the picking elements 5, already described in Invention Patent No. 1,298,367, comprises a first rocker 12 and a second rocker 13, which have two respective ends which are articulated to fixed points 14, 15 of the rotating drum 4, which are articulated at the opposite ends respectively to the mutually opposite end portions of a link 16 and of a rod 17, which are mutually articulated, so as to form a sort of articulated pentagon which lies on a plane which is substantially perpendicular to the rotation axis of the rotating drum 4. The grip and release means 8 for the boxes 2 are advantageously rigidly coupled to the link 16.

The grip and release means 8 conveniently comprise, for each one of the picking elements 5, at least one sucker 18, which is functionally connected to suction means, which are not shown in the figures but are fully known and are adapted to control selectively the sucker 18 so that it retains each box 2 in the flattened configuration after removing it from the magazine 3 and deposits it, in the open configuration, in one of the peripheral seats 11.

The cam means, as described in Invention Patent No. 1,298,367, comprise at least one ring, which is rigidly coupled to the footing of the machine concentrically with respect to the rotation axis of the rotating drum 4 and is affected on its surface by a plurality of tracks having a predefined profile which are closed around the axis of the drum, and at least one first roller and one second roller, which are associated rotatably respectively with the free ends of the first rocker 12 and of the second rocker 13 of each one of the picking elements 5; in particular, the first and second rollers are guided positively respectively along a first one and a second one of the tracks of the ring.

The first track and the second track of the cam means have respective profiles which are adapted to form sequentially, in the motion of each one of the picking elements 5, at least one first step or actuation, in which the link 16 moves toward the magazine 3, adapting its peripheral speed, so as to allow the grip means 8 to pick a box 2; at least one second step or actuation, in which the opening means 6 entrain the wall 2a of the box 2, making it assume an open configuration; and at least one third step or actuation, in which the link 16 performs a translational motion in a direction which is substantially radial with respect to the rotating drum 4, adapting its peripheral speed with respect to the speed of the rotating carousel 10 and its inclination with respect to the tangent with respect to said carousel, allowing the release means 8 to deposit the box 2 in the peripheral seat 11 of the rotating carousel 10.

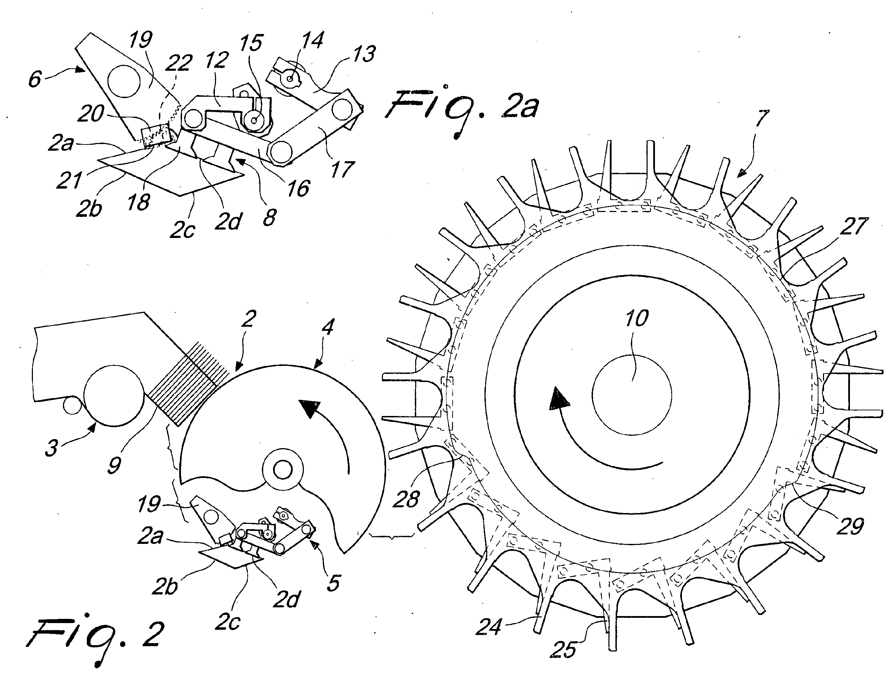

The opening means 6 (reference should be made to Figure 2a) comprise conveniently, for each one of the picking elements 5, a toothed sector 19, which is articulated to the rotating drum 4 and is provided with a wheel which is guided positively along a third one of the tracks provided on the ring of the cam means, a secondary shaft 20, which is supported rotatably in the rotating drum 4 and is provided, at one end, with at least one opening sucker 21 adapted to adhere to the wall 2a of each box 2 and, at the other end, a toothed pinion 22, which meshes with the sector 19. The third track has such a profile as to determine the rotation of the secondary shaft 20 about its own axis between two mutually opposite terminal angular positions, one for the adhesion of the opening sucker 21 to the wall 2a of the box 2 and one for the full opening of the box 2. The opening sucker 21 is functionally connected to suction means, which are not shown in the figures but are entirely known and are adapted to actuate selectively the sucker so as to adhere to the wall 2a of each box 2 in the flattened configuration and to release the wall 2a once the box has been opened.

Conveniently, each one of the peripheral seats 11 of the rotating carousel 10 comprises respective active grip elements 23, which are adapted to retain the boxes 2 in the open configuration. The active grip elements 23 comprise, for each one of the peripheral seats 11, a clamp which is constituted by a fixed element 24, which is arranged substantially radially, and a movable element 25, which is actuated so as to rotate about an axis 26 which is rigidly coupled to the rotating carousel 10 and is perpendicular thereto, from an angular position for retaining the box 2 in the open configuration to an angular position for releasing the box 2 and vice versa.

The rotating carousel comprises, for this purpose, a circular cam 27, which is concentric thereto and along which a cam follower is guided which is associated with the movable element 25 of the clamp, and there is a sort of step 28, which is adapted to turn the movable element 25 from the angular retention position to the angular release position and vice versa. A complementary step 29 is provided diametrically opposite and determines the reopening of the movable element 25 in order to transfer the boxes 2 to subsequent production stations.

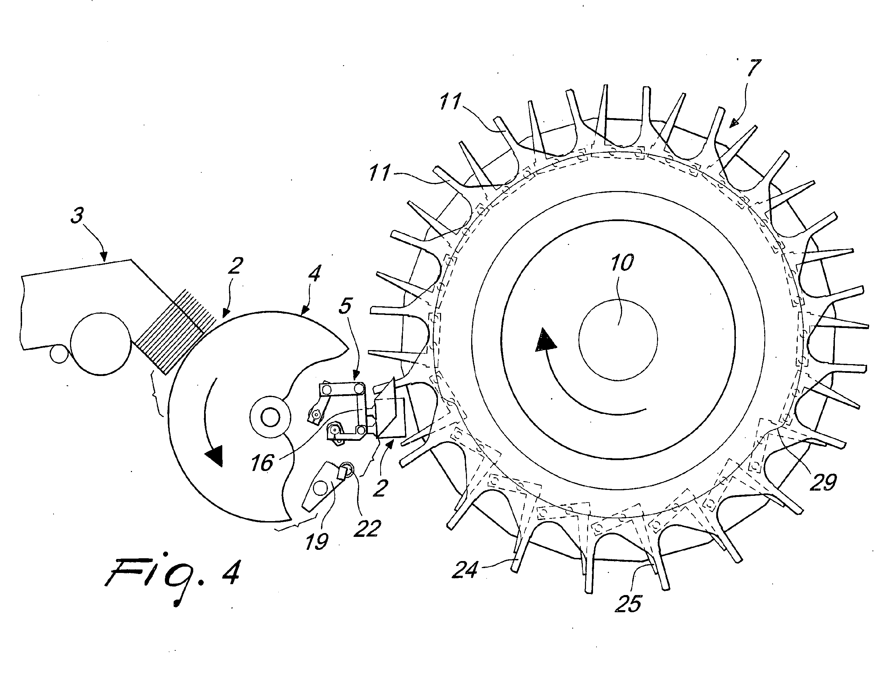

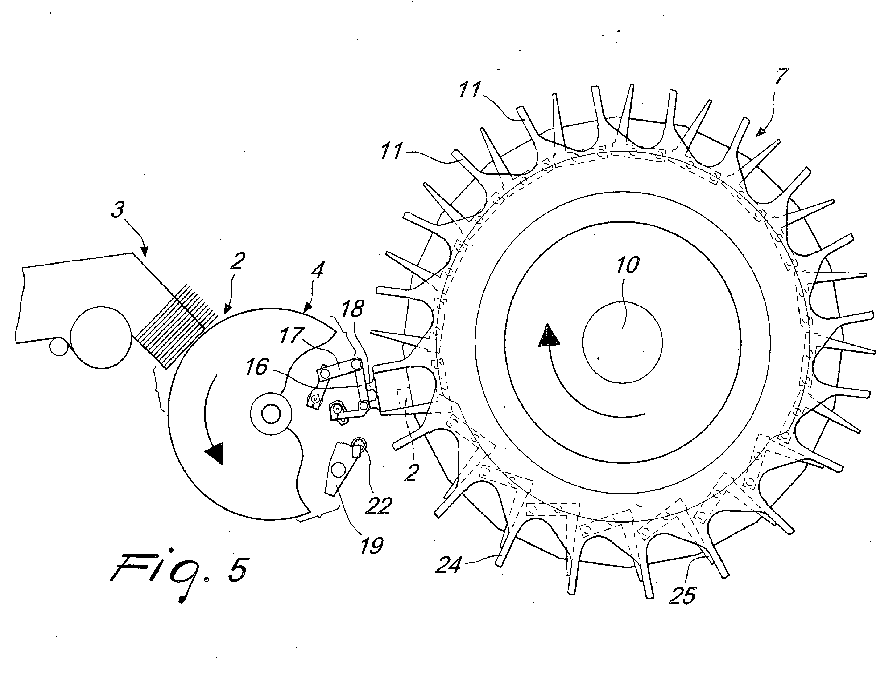

The operation of the device according to the invention is evident in view of what has been described. In a first step (Figure 1), the picking elements 5 actuated by the cam means grip a box 2 from the magazine 3: this occurs easily by way of the adaptation of the peripheral speed of the rotating drum 4 and in particular of the link 16. In a subsequent step (Figure 2), after the drum 4 has turned through a preset angle, the box 2 opens: in detail, the cam means move the link 16 (provided with the box 2) toward the opening means 6, and the simultaneous rotation of the secondary shaft 20 about its own axis allows the adhesion of the opening sucker 21 to the wall 2a. The contrarotation of the secondary shaft 20 then provides the actual complete opening of the box 2 by entraining the wall 2a (Figure 3). Subsequently, the cam means produce a radial translational motion of the link 16 toward the rotating carousel 10, providing the insertion of the open box 2 in a respective peripheral seat, by way of the appropriate synchronization of the peripheral speeds of the rotating drum 4 and of the carousel 10, and by means of the inclination of the link 16 (Figure 4). The open box 2 is then clamped between the fixed element 24 and the movable element 25 (Figure 5), by way of the interaction between the movable element 25 and the circular cam 27. The boxes are then conveyed toward other production stations, for example stations for filling the boxes with the products to be packaged.

It has thus been shown that the invention achieves the proposed aim and objects. The device is extremely flexible and versatile and is capable of handling boxes in the most disparate formats (reference should be made, for example, to the small box shown in discontinuous lines in Figure 5). In practical operation, the device has proved to be adapted to obviate the above-mentioned drawbacks.

The invention thus conceived is susceptible of numerous modifications and variations, all of which are within the scope of the appended claims.

All the details may further be replaced with other technically equivalent ones.

The embodiment of the present invention shall be carried out in the most scrupulous compliance with the statutory and regulatory provisions related to the products of the invention or correlated thereto and following any required authorization of the corresponding competent authorities, with particular reference to regulations related to safety, environmental pollution and health.

In practice, the materials used, as well as the shapes and the dimensions, may be any according to requirements without thereby abandoning the scope of the protection of the appended claims.

The disclosures in Italian Patent Application No. BO2005A000212 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for picking and opening boxes suitable for packaging products, comprising: at least one magazine (3) for substantially parallelepipedal boxes (2) in a flattened configuration, at least one rotating drum (4) which is provided peripherally with elements (5) for picking the boxes (2) one by one from said magazine (3) and with means (6) for opening the boxes (2), and at least one conveyor (7) for conveying the boxes (2) in the open configuration from said rotating drum (4) toward successive production stations of the product packaging process, said box picking elements (5) and said box opening means (6) being actuated by cam means; said picking elements (5) being of the articulated type and comprising a first rocker (12), a second rocker (13) having two first respective ends thereof articulated to fixed points (14, 15) of said rotating drum (4) and a link (16) that is provided with means (8) for gripping the boxes (2) from said magazine (3) and for releasing the boxes (2) into said conveyor (7), said conveyor forming a plurality of peripheral seats (11), which are adapted to accommodate the boxes (2) in the open configuration deposited by said grip and release means (8) so as to convey them in an orderly fashion toward said subsequent production stations, said first and second rockers (12, 13) having second ends opposite to said first ends which are articulated, respectively, to mutually opposite end portions of said link (16) and of a rod (17) that are mutually articulated , said picking elements (5) forming so an articulated pentagon which lies on a plane that is substantially perpendicular to the rotation axis of said rotating drum (4); **characterized in that** said conveyor (7) comprises at least one rotating carousel (10), which has a rotation axis which is parallel to the axis of said rotating drum (4) and **in that** said cam means comprise at least one ring, which is rigidly coupled to the footing of the machine concentrically with respect to the rotation axis of said drum (4) and is provided on its surface with a plurality of tracks having a predefined profile which are closed around said drum axis, and at least one first roller and one second roller, which are rotatably associated respectively with the first ends of said first rocker (12) and of said second rocker (13) of each one of said picking elements (5), said first and second rollers being guided positively respectively along a first one and a second one of said tracks of said ring; said first track and said second track having respective profiles which are adapted to produce sequentially, in the motion of each one of said picking elements (5), at least one first step in which said link (16) is movable toward said magazine (3) whereby to adapt its peripheral speed so as to allow said grip and release means (8) to pick up a box (2), at least one second step in which said opening means (6) can entrain one of the walls (2a) of the box (2) so as to move it to an open configuration, and at least one third step in which said link (16) can move in a substantially radial direction adapting its peripheral speed with respect to the speed of said rotating carousel (10) and its inclination with respect to the tangent thereto so as to allow said grip and release means (8) to deposit the box (2) in said peripheral seat (11) of said rotating carousel (10).

2. The device according to claim 1, **characterized in that** it comprises actuation means which are suitable to turn, with adapted and predefined peripheral speeds, said rotating drum (4) in the opposite direction with respect to said rotating carousel (10), so as to allow the deposition of the boxes (2) opened by said grip and release means (8) into said peripheral seats (11).

3. The device according to claims 1 and 2, **characterized in that** each one of said peripheral seats (11) of said rotating carousel (10) comprises respective active grip elements (23), which are suitable to retain the boxes (2) in the open configuration.

4. The device according to one or more of the preceding claims, **characterized in that** said active grip elements (23) comprise a clamp which is constituted by a fixed element (24), which is arranged substantially radially, and a movable element (25), which is actuated so as to turn about an axis (26) which is rigidly coupled to said rotating carousel (10) and perpendicular thereto, from an angular position for retaining the box (2) in the open configuration to an angular position for releasing said box (2) and vice versa.

5. The device according to one or more of the preceding claims, **characterized in that** said rotating carousel (10) comprises a circular cam (27), which is concentric thereto and along which a cam follower is guided, said cam follower being associated with said movable element (25) of said clamp, so as to turn said movable element (25) from said angular retention position to said angular release position and vice versa.

6. The device according to one or more of the preceding claims, **characterized in that** said grip and release means (8) comprise, for each one of said picking elements (5), at least one sucker (18), which is functionally connected to suction means which are suitable to control selectively said sucker (18) so as to retain each box (2) in a flattened configuration after picking it up from said magazine (3) and deposit it, in the open configuration, in one of said peripheral seats (11).

7. The device according to one or more of the preceding claims, **characterized in that** said opening means (6) comprise, for each one of said picking elements (5), a toothed sector (19), which is articulated to said drum (4) and is provided with a wheel which is guided positively along a third one of said tracks of said ring, a secondary shaft (20), which is supported so that it can rotate in said rotating drum (4) and has, at one end, at least one opening sucker (21), which is adapted to adhere to one of the walls (2a) of each box (2), and, at the other end, a toothed pinion (22), which meshes with said sector (19), said third track having such a profile as to determine the rotation of such secondary shaft (20), about its own axis, between two mutually opposite angular end positions, of which one is for the adhesion of said sucker (18) to the wall (2a) of the box (2) and one is for the complete opening of said box (2).

8. The device according to one or more of the preceding claims, **characterized in that** said opening sucker (21) is functionally connected to suction means, which are adapted to control selectively said sucker (21) so as to adhere to one of the walls (2a) of each box (2) in the flattened configuration and to release said wall (2a) once the box (2) has been opened.

9. The device according to one or more of the preceding claims, **characterized in that** said production stations comprise at least one automatic station for filling the boxes (2) with the products to be packaged.

## Patentansprüche

1. Vorrichtung zum Aufnehmen und Öffnen von Kisten, die für die Verpackung von Produkten geeignet sind, die umfasst: wenigstens ein Magazin (3) für im Wesentlichen parallelepipedförmige Kisten (2) in einer abgeflachten Konfiguration; wenigstens eine rotierende Trommel (4), die an ihrem Umfang mit versehen ist mit Elementen (5), um die Kisten (2) einzeln aus dem Magazin (3) aufzunehmen, und mit Mitteln (6), um die Kisten (2) zu öffnen; und wenigstens eine Fördereinrichtung (7), um die Kisten (2) in der offenen Konfiguration von der rotierenden Trommel (4) zu aufeinander folgenden Produktionsstationen des Produktverpackungsprozesses zu befördern, wobei die Kistenaufnahmeelemente (5) und die Kistenöffnungsmittel (6) durch Nockenmittel betätigt werden; wobei die Aufnahmeelemente (5) vom Gelenktyp sind und einen ersten Kipphebel (12), einen zweiten Kipphebel (13), wovon zwei jeweilige erste Enden an festen Punkten (14, 15) der rotierenden Trommel (4) angelenkt sind, und ein Verbindungsglied (16), das mit Mitteln (8) zum Ergreifen der Kisten (2) aus dem Magazin (3) und zum Freigeben der Kisten (2) in die Fördereinrichtung (7) besitzen, wobei die Fördereinrichtung mehrere Umfangssitze (11) bildet, die dazu ausgelegt sind, die Kisten (2) in der offenen Konfiguration, die durch die Greif- und Freigabemittel (8) abgelagert worden sind, aufzunehmen, um sie in geordneter Weise zu den nachfolgenden Produktionsstationen zu befördern, wobei der erste und der zweite Kipphebel (12, 13) zweite Enden gegenüber den ersten Enden besitzen, die jeweils an einander gegenüberliegenden Endabschnitten des Verbindungsglieds (16) und einer Stange (17), die aneinander angelenkt sind, angelenkt sind, wobei die Aufnahmeelemente (5) ein Gelenkfünfeck bilden, das in einer Ebene liegt, die zu der Drehachse der rotierenden Trommel (4) im Wesentlichen senkrecht ist; **dadurch gekennzeichnet, dass** die Fördereinrichtung (7) wenigstens ein rotierendes Karussell (10) aufweist, dessen Drehachse zu der Achse der rotierenden Trommel (4) parallel ist, und **dass** die Nockenmittel wenigstens einen Ring umfassen, der mit der Fußfläche der Maschine konzentrisch in Bezug auf die Drehachse der Trommel (4) starr gekoppelt ist und auf seiner Oberfläche mit mehreren Bahnen versehen ist, die ein im Voraus definiertes Profil haben und um die Trommelachse geschlossen sind, und wenigstens eine erste Rolle und eine zweite Rolle aufweisen, die den ersten Enden des ersten Kipphebels (12) bzw. des zweiten Kipphebels (13) jedes der Aufnahmeelemente (5) drehbar zugeordnet sind, wobei die ersten und zweiten Rollen längs einer ersten bzw. einer zweiten der Bahnen des Rings zwangsläufig geführt werden; wobei die erste und die zweite Bahn jeweilige Profile haben, die dazu ausgelegt sind, bei der Bewegung jedes der Aufnahmeelemente (5) nacheinander wenigstens eine erste Stufe, in der das Verbindungsglied (16) zu dem Magazin (3) bewegt werden kann, wodurch ihre Umfangsgeschwindigkeit angepasst wird, um den Greif- und Freigabemitteln (8) zu ermöglichen, eine Kiste (2) aufzunehmen, wenigstens eine zweite Stufe, in der die Öffnungsmittel (6) eine der Wände (2a) der Kiste (2) mitnehmen können, um sie in eine geöffnete Konfiguration zu bewegen, und wenigstens eine dritte Stufe, in der sich das Verbindungsglied (16) in einer im Wesentlichen radialen Richtung bewegen kann und seine Umfangsgeschwindigkeit in Bezug auf die Geschwindigkeit des rotierenden Karussells (10) und seine Neigung in Bezug auf die Tangente daran so anpassen kann, dass den Greif- und Freigabemitteln (8) ermöglicht wird, die Kiste (2) in dem Umfangssitz (11) des rotierenden Karussells (10) abzulegen, zu erzeugen.

2. Vorrichtung nach Anspruch 1, **dadurch gekennzeichnet, dass** sie Betätigungsmittel umfasst, die geeignet sind, mit angepassten und im Voraus definierten Umfangsgeschwindigkeiten die rotierende Trommel (4) in der zu jener des rotierenden Karussells (10) entgegengesetzten Richtung zu drehen, um das Ablegen der geöffneten Kisten (2) durch die Greif- und Freigabemittel (8) in den Umfangssitzen (11) zu ermöglichen.

3. Vorrichtung nach den Ansprüchen 1 und 2, **dadurch gekennzeichnet, dass** jeder der Umfangssitze (11).des rotierenden Karussells (10) jeweilige aktive Greifelemente (23) umfasst, die geeignet sind, die Kisten (2) in der geöffneten Konfiguration zu halten,

4. Vorrichtung nach einem oder mehreren der vorhergehenden Ansprüche, **dadurch gekennzeichnet, dass** die aktiven Greifelemente (23) eine Klemme umfassen, die durch ein festes Element (24), das im Wesentlichen radial angeordnet ist, und durch ein bewegliches Element (25), das betätigt wird, um sich um eine Achse (26), die mit dem rotierenden Karussell (10) starr gekoppelt und dazu senkrecht ist, aus einer Winkelposition zum Halten der Kiste (2) in der geöffneten Konfiguration in eine Winkelposition zum Freigeben der Kiste (2) und umgekehrt zu drehen, gebildet ist.

5. Vorrichtung nach einem oder mehreren der vorhergehenden Ansprüche, **dadurch gekennzeichnet, dass** das rotierende Karussell (10) einen kreisförmigen Nocken (27) umfasst, der dazu konzentrisch ist und längs dessen ein Nockenfolger geführt wird, wobei der Nockenfolger dem beweglichen Element (25) der Klemme zugeordnet ist, um das bewegliche Element (25) aus der Halte-Winkelposition in die Freigabe-Winkelposition und umgekehrt zu drehen.

6. Vorrichtung nach einem oder mehreren der vorhergehenden Ansprüche, **dadurch gekennzeichnet, dass** die Greif- und Freigabemittel (8) für jedes der Aufnahmeelemente (5) wenigstens einen Sauger (18) umfassen, der mit Saugmitteln funktional verbunden ist, die geeignet sind, den Sauger (18) wahlweise zu steuern, um jede Kiste (2) in einer abgeflachten Konfiguration zu halten, nachdem sie aus dem Magazin (3) aufgenommen worden ist, und um sie in der geöffneten Konfiguration in einem der Umfangssitze (11) abzulegen.

7. Vorrichtung nach einem oder mehreren der vorhergehenden Ansprüche, **dadurch gekennzeichnet, dass** die Öffnungsmittel (6) für jedes der Aufnahmeelemente (5) einen gezahnten Sektor (19), der an der Trommel (4) angelenkt ist und mit einem Rad versehen ist, das zwangsläufig längs einer dritten der Bahnen des Rings geführt wird, eine sekundäre Welle (20), die so unterstützt ist, dass sie sich in der rotierenden Trommel (4) drehen kann, und an einem Ende wenigstens einen Öffnungssauger (21) besitzt, der dazu ausgelegt ist, an einer der Wände (2a) jeder Kiste (2) zu haften, und am anderen Ende ein Ritzel (22) besitzt, das mit dem Sektor (19) kämmt, umfassen, wobei die dritte Bahn ein Profil besitzt, derart, dass es die Drehung einer solchen sekundären Welle (20) um ihre eigene Achse zwischen zwei einander entgegengesetzten Winkel-Endpositionen bestimmt, wovon eine dem Anhaften des Saugers (18) an der Wand (2a) der Kiste (2) dient und eine dem vollständigen Öffnen der Kiste (2) dient.

8. Vorrichtung nach einem oder mehreren der vorhergehenden Ansprüche, **dadurch gekennzeichnet, dass** der Öffnungssauger (21) mit Saugmitteln funktional verbunden ist, die dazu ausgelegt sind, den Sauger (21) wahlweise zu steuern, so dass er an einer der Wände (2a) jeder Kiste (2) in der abgeflachten Konfiguration anhaftet und die Wand (2a) freigibt, sobald die Kiste (2) geöffnet worden ist.

9. Vorrichtung nach einem oder mehreren der vorhergehenden Ansprüche, **dadurch gekennzeichnet, dass** die Produktionsstationen wenigstens eine automatische Station umfassen, um die Kisten (2) mit zu verpackenden Produkten zu befüllen.

## Revendications

1. Dispositif de prélèvement et d'ouverture de boîtes approprié pour des produits d'emballage, dispositif comprenant au moins un réservoir (3) pour des boîtes (2) essentiellement parallélépipédiques en configuration plate, au moins un tambour rotatif (4) pourvu, sur sa périphérie, d'éléments (5) pour prélever les boîtes (2), une par une, dudit réservoir (3), et de moyens (6) pour ouvrir les boîtes (2), et au moins un convoyeur (7) pour transporter les boîtes (2) en configuration ouverte depuis ledit tambour rotatif (4) vers des postes de production successifs du processus d'emballage de produits, lesdits éléments de prélèvement de boîtes (5) et lesdits moyens d'ouverture de boîtes (6) étant actionnés par un moyen à came, lesdits éléments de prélèvement (5) étant de type articulé et comprenant un premier bras oscillant (12), un second bras oscillant (13), dont respectivement deux premières extrémités sont articulées à des points fixes (14, 15) dudit tambour rotatif (4), et une bielle d'accouplement (16) pourvue de moyens (8) pour saisir les boîtes (2) dans ledit réservoir (3) et les déposer dans ledit convoyeur (7), ledit convoyeur formant une pluralité de supports périphériques (11) adaptés pour recevoir en configuration ouverte les boîtes (2) déposées par ledit moyen de saisie et de dépôt (8), afin de les transporter d'une manière ordonnée vers lesdits postes de production subséquents, lesdits premier et second bras oscillants (12, 13) possédant des secondes extrémités opposées auxdites premières extrémités, secondes extrémités qui sont respectivement articulées à des portions d'extrémité, opposées l'une à l'autre, de ladite bielle d'accouplement (16) et d'une tige (17), qui sont articulées l'une à l'autre, lesdits éléments de prélèvement (5) formant ainsi un pentagone articulé qui est posé sur une surface essentiellement perpendiculaire à l'axe de rotation dudit tambour rotatif (4), **caractérisé en ce que** ledit convoyeur (7) comprend au moins un carrousel rotatif (10) ayant un axe de rotation parallèle à l'axe dudit tambour de rotation (4), et **en ce que** ledit moyen à came comprend au moins un anneau couplé de manière rigide à l'embase de la machine et de manière concentrique par rapport à l'axe de rotation dudit tambour (4), et dont la surface est pourvue d'une pluralité de gorges présentant un profil prédéfini, gorges qui sont fermées autour dudit axe de tambour, et au moins un premier galet et un second galet, associés respectivement aux premières extrémités dudit premier bras oscillant (12) et dudit second bras oscillant (13) de chacun desdits éléments de prélèvement (5) de façon à pouvoir tourner, lesdits premier et second galets étant respectivement guidés positivement le long d'une première et d'une seconde desdites rainures dudit anneau, ladite première rainure et ladite seconde rainure présentant respectivement des profils adaptés pour produire séquentiellement, lorsque chacun desdits éléments de prélèvement (5) est en mouvement, au moins une première étape au cours de laquelle ladite bielle d'accouplement (16) peut être déplacée vers ledit réservoir (3) tout en adaptant sa vitesse périphérique de manière à permettre aux moyens de saisie et de dépôt (8) de saisir une boîte (2), au moins une seconde étape au cours de laquelle lesdits moyens d'ouverture (6) peuvent entraîner une des parois (2a) de la boîte (2) afin de la placer en configuration ouverte, et au moins une troisième étape au cours de laquelle ladite bielle d'accouplement (16) peut se déplacer dans une direction essentiellement radiale en adaptant sa vitesse périphérique par rapport à la vitesse dudit carrousel rotatif (10) et son inclinaison par rapport à la tangente de celui-ci, de manière à permettre audit moyen de saisie et de dépôt (8) de déposer la boîte (2) dans ledit support périphérique (11) dudit carrousel rotatif (10).

2. Dispositif selon la revendication 1, **caractérisé en ce qu'**il comprend des moyens d'actionnement appropriés pour tourner ledit tambour rotatif (4) dans la direction opposée par rapport audit carrousel rotatif (10) à des vitesses périphériques adaptées et prédéfinies, de manière que les boîtes (2) ouvertes par ledit moyen de saisie et de dépôt (8) puissent être déposées dans lesdits supports périphériques (11).

3. Dispositif selon les revendications 1 et 2, **caractérisé en ce que** chacun desdits supports périphériques (11) dudit carrousel rotatif (10) comprend respectivement des éléments de saisie actifs (23) appropriés pour retenir les boîtes (2) en configuration ouverte.

4. Dispositif selon l'une ou plusieurs des revendications précédentes, **caractérisé en ce que** lesdits éléments de saisie actifs (23) comprennent une pince constituée par un élément stationnaire (24) disposé de manière essentiellement radiale et par un élément mobile (25) actionné de manière à tourner autour d'un axe (26), qui est couplé de manière rigide audit carrousel rotatif (10) et perpendiculaire à celui-ci, depuis une position angulaire de retenue de la boîte (2) en configuration ouverte vers une position angulaire de dépôt de ladite boîte (2), et vice versa.

5. Dispositif selon l'une ou plusieurs des revendications précédentes, **caractérisé en ce que** ledit carrousel rotatif (10) comprend une came circulaire (27), concentrique par rapport à celui-ci, came circulaire le long de laquelle est guidé un galet suiveur, ledit galet suiveur étant associé audit élément mobile (25) de ladite pince de manière à faire tourner ledit élément mobile (25) depuis ladite position de retenue angulaire vers ladite position angulaire de dépôt, et vice versa.

6. Dispositif selon l'une ou plusieurs des revendications précédentes, **caractérisé en ce que** ledit moyen de saisie et de dépôt (8) comprend, pour chacun desdits éléments de prélèvement (5), au moins une ventouse (18) reliée fonctionnellement à des moyens de succion appropriés pour commander sélectivement ladite ventouse (18) de manière à retenir chaque boîte (2) en configuration plate après l'avoir prélevée dudit réservoir (3) et à la déposer, en configuration ouverte, dans un desdits supports périphériques (11).

7. Dispositif selon l'une ou plusieurs des revendications précédentes, **caractérisé en ce que** lesdits moyens d'ouverture (6) comprennent, pour chacun desdits éléments de prélèvement (5), un secteur denté (19) articulé audit tambour (4) et pourvu d'une roue guidée positivement le long d'une troisième desdites gorges dudit anneau, un arbre secondaire (20) supporté de manière à pouvoir tourner dans ledit tambour rotatif (4) et possédant, à une extrémité, au moins une ventouse d'ouverture (21) adaptée pour adhérer à une des parois (2a) de chaque boîte (2) et, à l'autre extrémité, un pignon denté (22) engrenant dans ledit secteur (19), ladite troisième gorge ayant un profil tel qu'il déterminé la rotation de cet arbre secondaire (20) autour de son propre axe, entre deux positions extrêmes angulaires, opposées l'une à l'autre, dont l'une est destinée à faire adhérer ladite ventouse (18) à la paroi (2a) de la boîte (2) et l'autre, à causer l'ouverture complète de ladite boîte (2).

8. Dispositif selon l'une ou plusieurs des revendications précédentes, **caractérisé en ce que** ladite ventouse d'ouverture (21) est reliée fonctionnellement à des moyens de succion adaptés pour commander sélectivement ladite ventouse (21) de manière qu'elle adhère à une des parois (2a) de chaque boîte (2) en configuration plate et qu'elle relâche ladite paroi (2a) une fois que la boîte (2) a été ouverte.

9. Dispositif selon l'une ou plusieurs des revendications précédentes, **caractérisé en ce que** lesdits postes de production comprennent au moins un poste automatique de remplissage des boîtes (2) de produits à emballer.
